Europäisches Patentamt

European Patent Office

Office européen des brevets

(19)

(11) Veröffentlichungsnummer: **0 053 256**
**B1**

(12) **EUROPÄISCHE PATENTSCHRIFT**

(45) Veröffentlichungstag der Patentschrift:
29.08.84

(51) Int. Cl.³: **B 29 F 1/00**

(21) Anmeldenummer: 81108375.7

(22) Anmeldetag. 15.10.81

(54) Verfahren zum Herstellen von mit verschiedenen Zeichen versehenen gleichartigen Kunststoffteilen, insbesondere Kunststoff-Gerätetasten durch Spritzgiessen.

(30) Priorität: 27.11.80 DE 3044722

(43) Veröffentlichungstag der Anmeldung:
09.06.82 Patentblatt 82/23

(45) Bekanntmachung des Hinweises auf die Patenterteilung:
29.08.84 Patentblatt 84/35

(84) Benannte Vertragsstaaten:
CH FR GB IT LI SE

(56) Entgegenhaltungen:
DE - A - 2 936 926
GB - A - 836 120

(73) Patentinhaber: SIEMENS AKTIENGESELLSCHAFT,
Berlin und München Wittelsbacherplatz 2,
D-8000 München 2 (DE)

(72) Erfinder: Edinger, Egon, Ing. grad.,
Friedemann-Bach-Strasse 69, D-8032 Gräfelfing (DE)
Erfinder: Kohler, Gerd, Dipl.-Ing., Romanstrasse 1 a,
D-8000 München 19 (DE)

## Beschreibung

Die Erfindung bezieht sich auf ein Verfahren zum Herstellen von mit verschiedenen Zeichen versehenen gleichartigen Kunststoffteilen, insbesondere Kunststoff-Gerätetasten durch Spritzgießen, wobei dem Kunststoff des Grundmaterials ein sich bei Einwirkung von Energiestrahlung verfärbender Füllstoff beigemischt wird, wobei ferner aus diesem Kunststoff-Füllstoff-Gemisch mit einem einheitlichen Werkzeug Standardteile gespritzt werden und wobei die Oberfläche dieser Standardteile einer der Form des aufzubringenden Zeichens angepaßten Energiestrahlung ausgesetzt wird, welche diese an der Auftreffstelle entsprechend verfärbt, gemäß der nicht vorveröffentlichten EP-A-0 027 532.

Auf diese Weise können Kunststofftasten hergestellt werden, deren Beschriftung im Gegensatz zu bedruckten Tasten fester Bestandteil des Grundmaterials ist und die deshalb den Qualitätsstandard zweifarb-spritzgegossener Kunststoff-Tasten entsprechen. Hierbei wird als Füllmittel ein auf Wärmestrahlung ansprechendes Farbpulver verwendet, das beispielsweise von der Fa. A. W. Faber Castell unter dem Warenzeichen »Thermocolor« vertrieben wird.

Der Erfindung liegt die Aufgabe zugrunde, das Verfahren nach der genannten älteren europäischen Patentanmeldung nicht nur zu verbessern, sondern auch wirtschaftlicher zu gestalten.

Diese Aufgabe wird mit dem erfindungsgemäßen Verfahren dadurch gelöst, daß dem Kunststoff als Füllstoff Ruß bzw. Graphit beigemischt wird, und zwar in einer Konzentration, die eine einen Schmelz- bzw. Gasungsvorgang auslösende Absorption erst in einer Tiefe von etwa 0,1 mm bewirkt. Vorzugsweise wird als Kunststoff, dem als Füllstoff Ruß bzw. Graphit beigemischt ist, Polyacetal (POM) verwendet.

Ruß bzw. Graphit werden in üblicher Weise bereits zum Schwarzeinfärben von Kunststoffen verwendet. Durch eine gezielte Einwirkung energiereicher Strahlung, z. B. durch einen Laser, wird bewirkt, daß u. a. der Kohlenstoff vom Ruß bzw. Graphit zu $CO_2$ verbrennt und als Gas entweicht. Hierdurch entsteht eine schaumartige Schmelzzone in Form des zu übertragenden Zeichens, in der sich keine Rußpartikel mehr befinden. Auf diese Weise entsteht ein kunststoffnaturfarbener Schriftzug auf schwarzem Untergrund, wobei durch die Lichtbrechung an den Schaumbläschen der Weißgrad erhöht wird.

Eine Voraussetzung für das Ablaufen der oben beschriebenen Reaktion ist, daß der Laser zunächst in die Tiefe der Kunststoffoberfläche eindringen kann, da er sonst Teilchen der Oberfläche abtragen (vergasen, verbrennen) würde.

Diese Voraussetzung wird dadurch erfüllt, daß naturfarbene opake oder durchsichtige Thermoplaste mit einer Pigmentkonzentration eingefärbt werden, die so eingestellt ist, daß der Laser erst in einer entsprechenden Tiefe (ca. 0,1 mm) so stark absorbiert wird, daß der Schmelz- und Gasungsvorgang abläuft. Es hat sich gezeigt, daß eine Pigmentkonzentration in den Grenzen von 0,08 bis 0,125% Ruß (d. h. 99,875 bis 99,92 Gewichts-% POM natur, 0,08 bis 0,125% Ruß) eine gute Beschriftbarkeit ergibt.

Die Umwandlungstiefe betrug hierbei 0,1 bis 0,15 mm. Höhere als die vorstehende Rußkonzentration sind möglich, wenn die für das Laserbeschriften notwendige Transparenz durch Beimengen von Kreide oder ähnlichen transparenten kristallinen Mineralien oder sonstigen Füllstoffen erzielt wird.

Eine weitere Verbesserung des Weißgrades des Schriftzuges kann erfindungsgemäß noch dadurch erzielt werden, daß den Pigmenten optische Aufheller (z. B. Uvitex OB der Fa. Ciba Geigy) beigefügt werden, die durch die Lasereinwirkung nicht zerstört werden.

Ein weiterer Vorteil des Verfahrens gegenüber dem Zweifarbenspritzen ist, daß sehr dünne abriebfeste Schriftzüge (ca. 0,1 mm) erzeugt werden können.

Ein wesentlicher Vorteil des erfindungsgemäßen Verfahrens liegt darin, daß ein erprobter Füllstoff, nämlich Ruß bzw. Graphit verwendet wird, und daß damit die am häufigsten verwendete Farbenkombination von Schriftzeichen und Untergrund, nämlich weiß auf schwarzem Grund, entsteht.

Auch für die fertigungstechnische Beherrschung des Beschriftungsverfahrens ist der Umschlag von schwarzer Farbe in weiße Farbe wesentlich: Mit zunehmendem Umschlag nach weiß verringert sich die Absorption des Laserstrahls, so daß z. B. bei anfangs überdosierter Leistung des Laserstrahls sich von selbst ein Regelprozeß in Gang setzt, bei dem überschüssige Laserenergie durch Reflexion von der Kunststoffoberfläche abgestrahlt wird.

Da es sich bei den Kunststoff-Gerätetasten um Massenartikel handelt, Ruß bzw. Graphit normalerweise erheblich billiger sind als der bekannte Wärmestrahlungsindekator, wird das erfindungsgemäße Verfahren erheblich wirtschaftlicher.

## Patentansprüche

1. Verfahren zum Herstellen von mit verschiedenen Zeichen versehenen gleichartigen Kunststoffteilen, insbesondere Kunststoff-Gerätetasten durch Spritzgießen, wobei dem Kunststoff des Grundmaterials ein sich bei Einwirkung von Energiestrahlung verfärbender Füllstoff beigemischt wird, wobei ferner aus diesem Kunststoff-Füllstoff-Gemisch mit einem einheitlichen Werkzeug Standardteile gespritzt werden und wobei die Oberfläche dieser Standardteile einer der Form des aufzubringenden Zeichens angepaßten Energiestrahlung ausgesetzt wird, welche diese an der Auftreffstelle entsprechend verfärbt, dadurch gekennzeichnet, daß dem Kunststoff als Füllstoff Ruß bzw. Graphit beigemischt wird, und zwar in einer Konzentration, die eine einen Schmelz- bzw. Gasungsvorgang auslösende Absorption der Energiestrahlung erst in einer Tiefe von etwa 0,1 mm bewirkt.

2. Verfahren nach Anspruch 1, dadurch gekennzeichnet, daß als Kunststoff, dem als Füllstoff Ruß bzw. Graphit beigemischt ist, Polyacetal (POM) verwendet wird.

3. Verfahren nach Anspruch 2, dadurch gekennzeichnet, daß dem Kunststoff 0,08 bis 0,125% Ruß beigemischt sind.

4. Verfahren nach einem der Ansprüche 1 bis 3, dadurch gekennzeichnet, daß dem Ruß bzw. Graphit durch Lasereinwirkung nicht zerstörbare optische Aufheller beigemischt werden.

## Claims

1. A process for the production of similar synthetic resin elements, which are provided with different symbols, in particular equipment keys made of synthetic resin, by injection moulding, in which the synthetic resin of the basic material is mixed with a filler which discolours under the influence of energy radiation, in which, moreover, standard elements are moulded from this synthetic resin/filler mixture by means of a standard tool, and in which the surface of these standard elements is exposed to an energy radiation which corresponds to the L shape of the symbol to be applied and which correspondingly discolours the surface at the point of impact, characterised in that soot or graphite is mixed as filler with the synthetic resin in a concentration which brings about an absorption of the energy radiation, which causes a melting or vaporising reaction only at a depth of approximately 0.1 mm.

2. A process according to claim 1, characterised in that polyacetal (POM) is used as the synthetic resin which is mixed with soot or graphite as the filler.

3. A process according to claim 2, characterised in that 0.08 to 0.125% of soot are mixed with the synthetic resin.

4. A process according to one of claims 1 to 3, characterised in that the soot or graphite, as the case may be, is mixed with optical brighteners which are not destroyed by laser action.

## Revendications

1. Procédé de fabrication par moulage par injection de pièces en matière plastique de même type munies de signes différents, notamment de touches en matière plastique pour des appareils, qui consiste à mélanger à la matière plastique du matériau de base une matière de charge se colorant sous l'action d'un rayonnement d'énergie, à mouler par injection avec un outil normalisé des pièces standards en ce mélange de matière plastique et de matière de charge et à soumettre la surface de ces pièces standards à un rayonnement d'énergie adapté à la forme du signe à apposer et qui les colore d'une manière correspondante à l'endroit d'incidence, caractérisé en ce qu'il consiste à mélanger à la matière plastique de la suie ou du graphite comme matière de charge et cela en une concentration qui ne provoque une absorption du rayonnement d'énergie déclenchant un phénomène de fusion ou de dégagement de gaz que jusqu'à une profondeur de 0,1 mm environ.

2. Procédé suivant la revendication 1, caractérisé en ce qu'il consiste à utiliser comme matière plastique, à laquelle est ajoutée de la suie ou du graphite comme matière de charge, du polyacétal (POM).

3. Procédé suivant la revendication 2, caractérisé en ce qu'il consiste à mélanger à la matière plastique de 0,08 à 0,125% de suie.

4. Procédé suivant l'une des revendications 1 à 3, caractérisé en ce qu'il consiste à mélanger à la suie ou au graphite un agent d'azurage optique qui ne peut pas être détruit par l'action d'un laser.